# EUROPEAN PATENT APPLICATION

(11) **EP 4 664 696 A1**
(43) Date of publication of application: **17.12.2025**
(21) Application number: 23921170.9
(22) Date of filing: 10.02.2023
(51) Int. Cl.: H02B 13/035

(54) **GAS-INSULATED APPARATUS**

(71) Applicant: MITSUBISHI ELECTRIC CORPORATION, Chiyoda-ku Tokyo 100-8310 (JP)
(72) Inventor: UEDA, Masashi, Tokyo 100-8310 (JP); NAKAUCHI, Shinichiro, Tokyo 100-8310 (JP); NAKAMURA, Yasunori, Tokyo 100-8310 (JP); KISE, Koji, Tokyo 100-8310 (JP)
(74) Representative: Witte, Weller & Partner Patentanwälte mbB
(86) International application number: PCT/JP2023/004485
(87) International publication number: WO 2024/166340

(57) **Abstract**

A gas-insulated switch includes: a heat generator that generates heat when principal current flows; and an electrical connector (40) that is a portion of electrical connection between a rod-shaped conductor and a cylindrical conductor forming a conduction path of the principal current, wherein the electrical connector (40) includes: a plurality of ring-shaped conductors (84a, 84b, 84c, 84d) placed between the rod-shaped conductor (88) and the cylindrical conductor (89), the plurality of ring-shaped conductors (84a, 84b, 84c, 84d) includes first ring-shaped conductors (84b, 84c, 84d) and a second ring-shaped conductor (84a), the second ring-shaped conductor (84a) being disposed at a position more distant from the heat generator than the first ring-shaped conductors (84b, 84c, 84d), and an insulating layer (85) is provided between the first ring-shaped conductors (84b, 84c, 84d) and the cylindrical conductor (89) or between each of the first ring-shaped conductors (84b, 84c, 84d) and the rod-shaped conductor (88).

## Description

### Field

The present disclosure relates to a gas-insulated apparatus in which a plurality of conductors serving as a conduction path of principal current is housed in an airtight container in which an insulating gas is enclosed.

### Background

In a gas-insulated apparatus in which a plurality of conductors serving as a conduction path of principal current is housed in an airtight container in which an insulating gas is enclosed, a method for disposing a ring-shaped conductor called a conducting contact between a rod-shaped conductor and a cylindrical conductor is used for an electrical connector for electrical connection between the rod-shaped conductor and the cylindrical conductor. Thus, the rod-shaped conductor, the cylindrical conductor, and the ring-shaped conductor form a part of the conduction path. When the temperature of a portion serving as the conduction path of principal current increases in the gas-insulated apparatus, electrical resistance increases. As a result, principal current flowing through the conduction path may become smaller than a designed current. Therefore, the gas-insulated apparatus needs a heat dissipation structure for suppressing an increase in the temperature of a portion where the temperature is expected to increase when current flows, so as not to hinder operation of the apparatus.

Patent Literature 1 discloses a gas-insulated apparatus in which a surface of a contact portion serving as a heating element and a surface of a metal shield serving as a heat receiving body are blackened by anodization treatment to enhance performance of heat transfer from the heating element to the heat receiving body.

### Citation List

### Patent Literature

Patent Literature 1: Japanese Patent Application Laid-open No. 61-227329

### Summary of Invention

### Problem to be solved by the Invention

In an airtight container, the temperature of a ring-shaped conductor forming a part of a conduction path needs to be lowered to a level equal to or lower than a designed upper limit temperature set in advance, so as to prevent a decrease in current flowing through the conduction path as described above.

In the gas-insulated apparatus disclosed in Patent Literature 1, heat-transfer performance can be enhanced by the blackening resulting from anodization treatment, but electrical conductivity is reduced by anodization treatment. Therefore, when the gas-insulated apparatus disclosed in Patent Literature 1 is applied to a ring-shaped conductor connecting conductors, it is necessary to increase the area of a contact portion of the ring-shaped conductor, the portion being in contact with a cylindrical conductor. Thus, the gas-insulated apparatus disclosed in Patent Literature 1 has a problem in that an increase in the size of the entire apparatus cannot be avoided, in view of an insulation distance between the electrical connector and the airtight container.

The present disclosure has been made in view of the above, and an object of the present disclosure is to obtain a gas-insulated apparatus that achieves reduction in apparatus size while suppressing an increase in the temperature of a ring-shaped conductor that electrically connects a rod-shaped conductor and a cylindrical conductor that form a conduction path of principal current.

### Means to Solve the Problem

To the above-described problem and achieve the object, a gas-insulated apparatus according to the present disclosure includes: an airtight container in which insulating gas is enclosed; a heat generator disposed inside the airtight container and generates heat when principal current flows; and an electrical connector disposed inside the airtight container. The electrical connector is a portion of electrical connection between a rod-shaped conductor and a cylindrical conductor, the rod-shaped conductor forms a conduction path of the principal current, the rod-shaped conductor is inserted into the cylindrical conductor to form the conduction path of the principal current. The electrical connector includes a plurality of ring-shaped conductors placed between the rod-shaped conductor and the cylindrical conductor. The plurality of ring-shaped conductors comprise at least one first ring-shaped conductors and at least one second ring-shaped conductors. The second ring-shaped conductors are disposed at positions more distant from the heat generator than the first ring-shaped conductors. An insulating layer is provided between the first ring-shaped conductors and the cylindrical conductor or between the first ring-shaped conductors and the rod-shaped conductor.

### Effects of the Invention

The present disclosure achieves the effect of obtaining a gas-insulated apparatus that achieves reduction in apparatus size while suppressing an increase in the temperature of a ring-shaped conductor that electrically connects a rod-shaped conductor and a cylindrical conductor that form a conduction path of principal current.

### Brief Description of Drawings

FIG. 1 is a cross-sectional view of a gas-insulated switch according to a first embodiment.
FIG. 2 is an enlarged view of an electrical connector of the gas-insulated switch according to the first embodiment.
FIG. 3 is an enlarged view of an electrical connector of a gas-insulated switch according to a second embodiment.
FIG. 4 is an enlarged view of an electrical connector of a gas-insulated switch according to a third embodiment.
FIG. 5 is an enlarged view of an electrical connector of a gas-insulated switch according to a fourth embodiment.
FIG. 6 is an enlarged view of an electrical connector of a gas-insulated switch according to a fifth embodiment.

### Description of Embodiments

Hereinafter, gas-insulated apparatuses according to embodiments will be described in detail with reference to the drawings.

### First Embodiment.

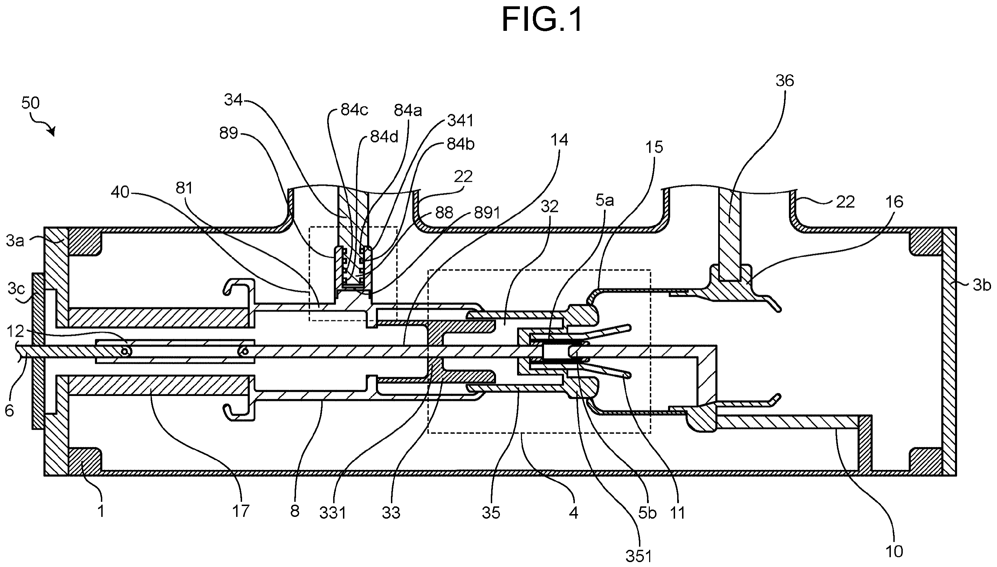

FIG. 1 is a cross-sectional view of a gas-insulated switch according to a first embodiment. A gas-insulated switch 50 according to the first embodiment, which is a type of gas-insulated apparatus, includes: a grounded tank 1 having a cylindrical shape; a movable-side contact 5a and a fixed-side contact 5b; a switching part 4 insulated and supported in the grounded tank 1; and a movable-side outer conductor 34, and a fixed-side outer conductor 36 disposed in a pair of bushings 22 extending upward from the grounded tank 1. Note that, in the gas-insulated switch 50 according to the first embodiment, the grounded tank 1 and the bushings 22 are integrally formed to serve as an airtight container in which an insulating gas is enclosed. In the gas-insulated switch 50, the movable-side contact 5a is movable, and an open state and a closed state are switched by movement of the movable-side contact 5a. An end plate 3a is placed at a movable-side end of the grounded tank 1, and an end plate 3b is placed at a fixed-side end of the grounded tank 1. The end plate 3a has a disk shape with a hole formed at the center. The hole in the end plate 3a is closed by a cap 3c. The end plate 3b has a disk shape with no hole. Note that, in a direction in which the movable-side contact 5a and the fixed-side contact 5b are arranged, a direction from the fixed-side contact 5b toward the movable-side contact 5a is referred to as a "movable side", and a direction from the movable-side contact 5a toward the fixed-side contact 5b is referred to as a "fixed side". In addition, a state in which the movable-side contact 5a and the fixed-side contact 5b are in contact with each other is referred to as the "closed state", and a state in which the movable-side contact 5a is separated from the fixed-side contact 5b is referred to as the "open state".

The switching part 4 is a heat generator that generates heat when current flows. In addition to the movable-side contact 5a and the fixed-side contact 5b, the switching part 4 includes: a nozzle 11 disposed around the movable-side contact 5a; a conductor rod 14 coupled to the movable-side contact 5a; a contact case 8 connected to a lower end of the movable-side outer conductor 34; a fixed-side support 16 connected to a lower end of the fixed-side outer conductor 36; and a fixed-side shield 15 supported by the fixed-side support 16.

The conductor rod 14 is coupled to an insulating rod 12 that is coupled to a shaft 6 of an operating device (not illustrated). The operating device is installed outside the grounded tank 1 so as to handle the movable-side contact 5a. The switching part 4 is insulated and supported by a movable-side insulating support member 17 and a fixed-side insulating support member 10 in the grounded tank 1.

The contact case 8 has a cylindrical shape, and is formed of a conductive material. The contact case 8 includes: a main body 81 that houses a contact 33; and a cylindrical conductor 89 that has a cylindrical shape with a bottom surface 891.

A step 341 is formed on the movable-side outer conductor 34 such that a tip portion of the movable-side outer conductor 34 serves as a rod-shaped conductor 88 having a small diameter. The step 341 is located on a side on which the movable-side outer conductor 34 is connected to the cylindrical conductor 89.

In the first embodiment, the rod-shaped conductor 88 and the cylindrical conductor 89 form a part of a conduction path of principal current. Therefore, a portion of connection between the rod-shaped conductor 88 and the cylindrical conductor 89 corresponds to an electrical connector 40 that electrically connects the rod-shaped conductor 88 and the cylindrical conductor 89 forming the conduction path of principal current. The electrical connector 40 includes four ring-shaped conductors 84a, 84b, 84c, and 84d in addition to the rod-shaped conductor 88 of the movable-side outer conductor 34 and the cylindrical conductor 89 of the contact case 8.

The contact 33 is placed in the contact case 8. The contact 33 is a conductive cylinder in contact with the contact case 8. An intermediate plate 331 is provided at an intermediate portion in an axial direction of the contact 33. In addition, a hole is formed in the intermediate plate 331 of the contact 33, and an inner peripheral surface of the hole is in contact with the conductor rod 14. The conductor rod 14 passes through the hole formed in the intermediate plate 331 of the contact 33, and is connected to the insulating rod 12. The movable-side outer conductor 34 is electrically connected with the conductor rod 14 via the contact case 8 and the contact 33.

A movable-side shield 35 is attached to the conductor rod 14 such that the movable-side shield 35 surrounds the movable-side contact 5a from the outer peripheral direction of the grounded tank 1. The movable-side shield 35 is disposed in a gap between the contact case 8 and the contact 33. An end portion 351 facing the fixed-side shield 15 protrudes from the gap between the contact case 8 and the contact 33. In the closed state where the movable-side contact 5a and the fixed-side contact 5b are in contact with each other, the end portion 351 of the movable-side shield 35 is in contact with the fixed-side shield 15.

A space enclosed by the movable-side shield 35 and the contact 33 serves as a puffer chamber 32 communicating with the nozzle 11. During an opening action for shifting from the closed state to the open state, a movable-side part of the movable-side shield 35 is housed in the gap between the contact case 8 and the contact 33. As a result, the volume of the puffer chamber 32 decreases to cause insulating gas to be jetted out of the nozzle 11. An arc formed between the movable-side contact 5a and the fixed-side contact 5b during the opening action is cooled and extinguished by the insulating gas jetted out of the nozzle 11.

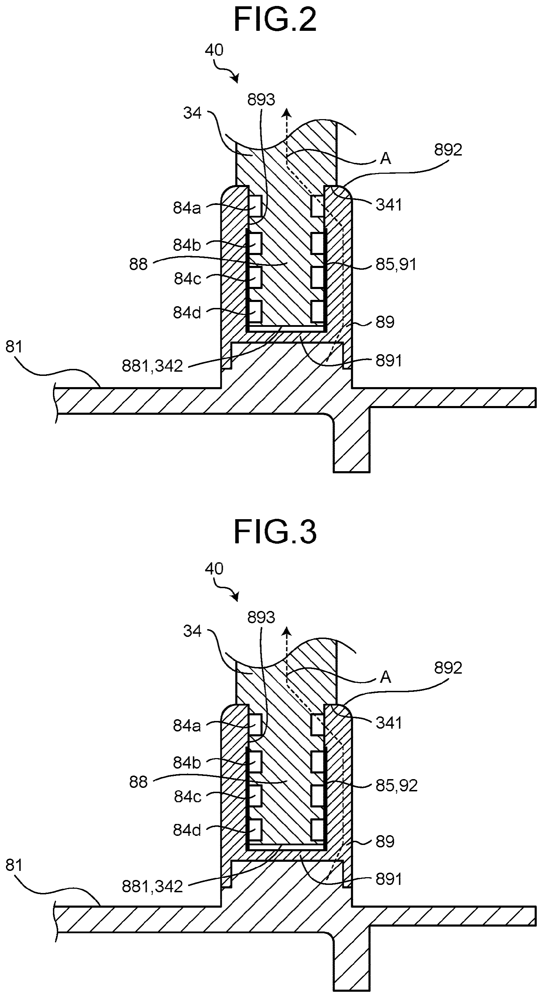

FIG. 2 is an enlarged view of the electrical connector of the gas-insulated switch according to the first embodiment. The axial length of the rod-shaped conductor 88 is shorter than the axial length of the cylindrical conductor 89. Therefore, the step 341 of the movable-side outer conductor 34 abuts against an end portion 892 of the cylindrical conductor 89, and a tip 881 of the rod-shaped conductor 88 is not in contact with the bottom surface 891 of the cylindrical conductor 89. The tip 881 of the rod-shaped conductor 88 also serves as a tip 342 of the movable-side outer conductor 34.

An insulating layer 85 is provided between the rod-shaped conductor 88 and a part of an inner peripheral surface 893 of the cylindrical conductor 89, the part being located closer to the bottom surface 891. The insulating layer 85 is an insulating film 91 formed on the inner peripheral surface 893 of the cylindrical conductor 89. As illustrated in FIG. 1, the bottom surface 891 is located closer to the switching part 4 than the cylindrical conductor 89. Thus, the insulating layer 85 can be considered to be provided at a part of the inner peripheral surface 893 of the cylindrical conductor 89, the part of the inner peripheral surface 893 being located closer to the switching part 4.

Four grooves are formed in the rod-shaped conductor 88. The ring-shaped conductors 84a, 84b, 84c, and 84d are each fitted into corresponding one of the grooves in the rod-shaped conductor 88. Here, a structure in which the grooves in which the ring-shaped conductors 84a, 84b, 84c, and 84d are disposed are provided in the rod-shaped conductor 88 has been taken as an example. Meanwhile, the grooves in which the ring-shaped conductors 84a, 84b, 84c, and 84d are disposed may be provided in the cylindrical conductor 89. Of the four ring-shaped conductors 84a, 84b, 84c, and 84d, the ring-shaped conductor 84a is most distant from the tip 881 of the rod-shaped conductor 88. The ring-shaped conductor 84a is in contact with the cylindrical conductor 89. The ring-shaped conductors other than the ring-shaped conductor 84a, that is, the ring-shaped conductors 84b, 84c, and 84d are in contact with the insulating layer 85. Among the ring-shaped conductors 84a, 84b, 84c, and 84d: the ring-shaped conductors 84b, 84c, and 84d are first ring-shaped conductors, and are in contact with the insulating layer 85; and the ring-shaped conductor 84a is a second ring-shaped conductor disposed at a position more distant from the switching part 4, serving as a heat generator, than the ring-shaped conductors 84b, 84c, and 84d that are the first ring-shaped conductors.

In the gas-insulated switch 50 according to the first embodiment, the insulating layer 85 is provided between the rod-shaped conductor 88 and the part of the inner peripheral surface 893 of the cylindrical conductor 89, the part of the inner peripheral surface 893 being located closer to the switching part 4, and no current flows through the ring-shaped conductors 84b, 84c, and 84d, which are the first ring-shaped conductors. Therefore, the conductor rod 14, the contact 33, the main body 81, the cylindrical conductor 89, and the ring-shaped conductor 84a, which is the second ring-shaped conductor, form the conduction path of principal current flowing between the movable-side contact 5a and the movable-side outer conductor 34. That is, as indicated by arrow A in FIG. 2, principal current flows only through the ring-shaped conductor 84a, and does not flow through the ring-shaped conductor 84b, 84c, or 84d.

In the gas-insulated switch 50 according to the first embodiment, heat generated in the switching part 4 is transferred to the rod-shaped conductor 88 through the path formed by the conductor rod 14, the contact 33, the main body 81, the cylindrical conductor 89, and the ring-shaped conductors 84b, 84c, and 84d. Of the four ring-shaped conductors 84a, 84b, 84c, and 84d, the ring-shaped conductor 84a serving as the conduction path is disposed at a position most distant from the switching part 4 serving as a heat generator. Thus, the ring-shaped conductor 84a is least affected by heat from the switching part 4.

In the gas-insulated switch 50 according to the first embodiment, the insulating layer 85 is provided between the rod-shaped conductor 88 and the part of the inner peripheral surface 893 of the cylindrical conductor 89, the part of the inner peripheral surface 893 being located closer to the switching part 4, and the ring-shaped conductors 84b, 84c, and 84d placed near the switching part 4 serving as a heat generator form no conduction path. Therefore, even if the ring-shaped conductors 84b, 84c, and 84d placed near the switching part 4 serving as a heat generator increase in temperature, the magnitude of principal current flowing through the conduction path is not affected.

In the gas-insulated switch 50 according to the first embodiment, the ring-shaped conductor 84a placed at the position most distant from the heat source serves as the conduction path of principal current. Therefore, the temperature of the ring-shaped conductor 84a serving as the conduction path is lower than the temperatures of the close ring-shaped conductors 84b, 84c, and 84d placed closer to the heat source. Accordingly, a heat dissipation area for dissipating heat so as to lower the temperature of the ring-shaped conductor 84a serving as the conduction path of principal current to a level equal to or lower than a designed upper limit temperature is smaller than a heat dissipation area for dissipating heat so as to lower the temperatures of the ring-shaped conductors 84b, 84c, and 84d not serving as the conduction path of principal current to a level equal to or lower than the designed upper limit temperature. Therefore, since the contact case 8 can be downsized in the gas-insulated switch 50 according to the first embodiment, the inner diameter of the grounded tank 1 necessary for electrical insulation decreases. Thus, the apparatus can be reduced in size.

### Second Embodiment.

FIG. 3 is an enlarged view of an electrical connector of a gas-insulated switch according to a second embodiment. The gas-insulated switch 50 according to the second embodiment is the same as the gas-insulated switch 50 according to the first embodiment, except for the electrical connector 40. In the electrical connector 40 of the gas-insulated switch 50 according to the second embodiment, an insulating thin plate 92 is disposed between the rod-shaped conductor 88 and a part of the inner peripheral surface 893 of the cylindrical conductor 89, the part of the inner peripheral surface 893 being located closer to the switching part 4 (not illustrated in FIG. 3), and the insulating thin plate 92 forms the insulating layer 85. Except for this point, the configuration of the electrical connector 40 of the gas-insulated switch 50 according to the present embodiment is the same as the configuration of the electrical connector 40 of the gas-insulated switch 50 according to the first embodiment.

In the gas-insulated switch 50 according to the second embodiment, the insulating thin plate 92 disposed between the rod-shaped conductor 88 and the part of the inner peripheral surface 893 of the cylindrical conductor 89, the part of the inner peripheral surface 893 being located closer to the switching part 4 (not illustrated in FIG. 3), forms the insulating layer 85, and no current flows through the ring-shaped conductors 84b, 84c, and 84d, which are the first ring-shaped conductors. Therefore, the conductor rod 14, the contact 33, the main body 81, the cylindrical conductor 89, and the ring-shaped conductor 84a, which is the second ring-shaped conductor, form the conduction path of principal current flowing between the movable-side contact 5a and the movable-side outer conductor 34. That is, as indicated by arrow A in FIG. 3, principal current flows only through the ring-shaped conductor 84a, and does not flow through the ring-shaped conductor 84b, 84c, or 84d.

In the gas-insulated switch 50 according to the second embodiment, the switching part 4 serves as a heat generator that generates heat when current flows, as in the gas-insulated switch 50 according to the first embodiment. Therefore, heat generated in the switching part 4 is transferred to the movable-side outer conductor 34 through the path formed by the conductor rod 14, the contact 33, the main body 81, the cylindrical conductor 89, and the ring-shaped conductors 84b, 84c, and 84d. Of the four ring-shaped conductors 84a, 84b, 84c, and 84d, the ring-shaped conductor 84a serving as the conduction path is disposed at a position most distant from the switching part 4 serving as a heat generator. Thus, the ring-shaped conductor 84a is least affected by heat from the switching part 4.

In the gas-insulated switch 50 according to the second embodiment, the insulating thin plate 92 disposed between the rod-shaped conductor 88 and the part of the inner peripheral surface 893 of the cylindrical conductor 89, the part of the inner peripheral surface 893 being located closer to the switching part 4 (not illustrated in FIG. 3), forms the insulating layer 85, and the ring-shaped conductors 84b, 84c, and 84d placed near the switching part 4 serving as a heat generator form no conduction path. Therefore, even if the ring-shaped conductors 84b, 84c, and 84d placed near the switching part 4 serving as a heat generator increase in temperature, the magnitude of principal current flowing through the conduction path is not affected.

In the gas-insulated switch 50 according to the second embodiment, the ring-shaped conductor 84a placed at the position most distant from the heat source serves as the conduction path of principal current, as in the gas-insulated switch 50 according to the first embodiment. Therefore, a heat dissipation area for dissipating heat so as to lower the temperature of the ring-shaped conductor 84a serving as the conduction path of principal current to a level equal to or lower than a designed upper limit temperature is smaller than a heat dissipation area for dissipating heat so as to lower the temperatures of the ring-shaped conductors 84b, 84c, and 84d not serving as the conduction path of principal current to a level equal to or lower than the designed upper limit temperature.
Therefore, since the contact case 8 can be downsized in the gas-insulated switch 50 according to the second embodiment, the inner diameter of the grounded tank 1 necessary for electrical insulation decreases. Thus, the apparatus can be reduced in size.

### Third Embodiment.

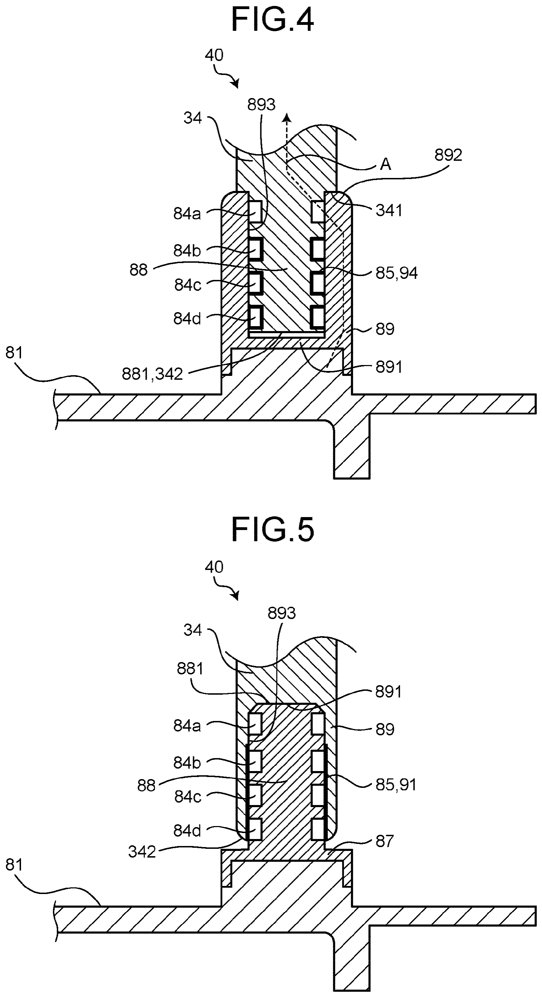

FIG. 4 is an enlarged view of an electrical connector of a gas-insulated switch according to a third embodiment. The gas-insulated switch 50 according to the third embodiment is the same as the gas-insulated switch 50 according to the first embodiment, except for the electrical connector 40. In the electrical connector 40 of the gas-insulated switch 50 according to the third embodiment, an insulating film 94 provided at a part of each of the ring-shaped conductors 84b, 84c, and 84d, the part being in contact with the rod-shaped conductor 88, forms the insulating layer 85. Except for this point, the configuration of the electrical connector 40 of the gas-insulated switch 50 according to the present embodiment is the same as the configuration of the electrical connector 40 of the gas-insulated switch 50 according to the first embodiment.

In the gas-insulated switch 50 according to the third embodiment, the insulating film 94 provided at the part of each of the ring-shaped conductors 84b, 84c, and 84d, the part being in contact with the rod-shaped conductor 88, forms the insulating layer 85, and no current flows through the ring-shaped conductors 84b, 84c, and 84d, which are the first ring-shaped conductors. Therefore, the conductor rod 14, the contact 33, the main body 81, the cylindrical conductor 89, and the ring-shaped conductor 84a, which is the second ring-shaped conductor, form the conduction path of principal current flowing between the movable-side contact 5a and the movable-side outer conductor 34. That is, as indicated by arrow A in FIG. 4, principal current flows only through the ring-shaped conductor 84a, and does not flow through the ring-shaped conductor 84b, 84c, or 84d.

In the gas-insulated switch 50 according to the third embodiment, the switching part 4 serves as a heat generator that generates heat when current flows, as in the gas-insulated switch 50 according to the first embodiment. Therefore, heat generated in the switching part 4 is transferred to the movable-side outer conductor 34 through the path formed by the conductor rod 14, the contact 33, the main body 81, the cylindrical conductor 89, and the ring-shaped conductors 84a, 84b, 84c, and 84d. Of the four ring-shaped conductors 84a, 84b, 84c, and 84d, the ring-shaped conductor 84a serving as the conduction path is disposed at a position most distant from the switching part 4 serving as a heat generator. Thus, the ring-shaped conductor 84a is least affected by heat from the switching part 4.

In the gas-insulated switch 50 according to the third embodiment, the insulating film 94 provided at the part of each of the ring-shaped conductors 84b, 84c, and 84d, the part being in contact with the movable-side outer conductor 34, forms the insulating layer 85, and the ring-shaped conductors 84b, 84c, and 84d placed near the switching part 4 serving as a heat generator form no conduction path. Therefore, even if the ring-shaped conductors 84b, 84c, and 84d placed near the switching part 4 serving as a heat generator increase in temperature, the magnitude of principal current flowing through the conduction path is not affected.

In the gas-insulated switch 50 according to the third embodiment, the ring-shaped conductor 84a placed at the position most distant from the heat source serves as the conduction path of principal current, as in the gas-insulated switch 50 according to the first embodiment. Therefore, a heat dissipation area for dissipating heat so as to lower the temperature of the ring-shaped conductor 84a serving as the conduction path of principal current to a level equal to or lower than a designed upper limit temperature is smaller than a heat dissipation area for dissipating heat so as to lower the temperatures of the ring-shaped conductors 84b, 84c, and 84d not serving as the conduction path of principal current to a level equal to or lower than the designed upper limit temperature.
Therefore, since the contact case 8 can be downsized in the gas-insulated switch 50 according to the third embodiment, the inner diameter of the grounded tank 1 necessary for electrical insulation decreases. Thus, the apparatus can be reduced in size.

### Fourth Embodiment.

FIG. 5 is an enlarged view of an electrical connector of a gas-insulated switch according to a fourth embodiment. The gas-insulated switch 50 according to the fourth embodiment is the same as the gas-insulated switch 50 according to the first embodiment, except for the electrical connector 40. In the electrical connector 40 of the gas-insulated switch 50 according to the fourth embodiment, a hole extending in the axial direction is formed in the tip 342 of the movable-side outer conductor 34, and the tip portion of the movable-side outer conductor 34 serves as the cylindrical conductor 89. In addition, the contact case 8 includes the rod-shaped conductor 88 and a support portion 87. The rod-shaped conductor 88 extends in the outer peripheral direction of the main body 81. The support portion 87 secures the rod-shaped conductor 88 to the main body 81. The axial length of the rod-shaped conductor 88 is longer than the axial length of the cylindrical conductor 89. Therefore, the tip 881 of the rod-shaped conductor 88 abuts against the bottom surface 891 of the cylindrical conductor 89, and the tip 342 of the movable-side outer conductor 34 is not in contact with the support portion 87.

The insulating layer 85 is provided between the rod-shaped conductor 88 and a part of the inner peripheral surface 893 of the cylindrical conductor 89, the part of the inner peripheral surface 893 being located closer to the switching part 4 (not illustrated in FIG. 5) that generates heat when current flows. The insulating layer 85 is an insulating film 91 formed on the inner peripheral surface 893 of the cylindrical conductor 89.

Four grooves are formed in the rod-shaped conductor 88. The ring-shaped conductors 84a, 84b, 84c, and 84d are each fitted into corresponding one of the grooves in the rod-shaped conductor 88. Here, a structure in which the grooves in which the ring-shaped conductors 84a, 84b, 84c, and 84d are disposed are provided in the rod-shaped conductor 88 has been taken as an example. Meanwhile, the grooves in which the ring-shaped conductors 84a, 84b, 84c, and 84d are disposed may be provided in the cylindrical conductor 89. Of the four ring-shaped conductors 84a, 84b, 84c, and 84d, the ring-shaped conductor 84a is most distant from the switching part 4. The ring-shaped conductor 84a is in contact with the cylindrical conductor 89. The ring-shaped conductors other than the ring-shaped conductor 84a, that is, the ring-shaped conductors 84b, 84c, and 84d are in contact with the insulating layer 85. Among the ring-shaped conductors 84a, 84b, 84c, and 84d: the ring-shaped conductors 84b, 84c, and 84d in contact with the insulating layer 85 are first ring-shaped conductors; and the ring-shaped conductor 84a is a second ring-shaped conductor disposed at a position more distant from the switching part 4, serving as a heat generator, than the ring-shaped conductors 84b, 84c, and 84d that are the first ring-shaped conductors.

In the gas-insulated switch 50 according to the fourth embodiment, the insulating layer 85 is provided between the rod-shaped conductor 88 and the part of the inner peripheral surface 893 of the cylindrical conductor 89, the part of the inner peripheral surface 893 being located closer to the switching part 4 (not illustrated in FIG. 5), and the ring-shaped conductors 84b, 84c, and 84d placed near the switching part 4 form no conduction path. Therefore, even if the ring-shaped conductors 84b, 84c, and 84d placed near the switching part 4 serving as a heat generator increase in temperature, the magnitude of principal current flowing through the conduction path is not affected.

In the gas-insulated switch 50 according to the fourth embodiment, the ring-shaped conductor 84a placed at the position most distant from the heat source serves as the conduction path of principal current. Therefore, the temperature of the ring-shaped conductor 84a serving as the conduction path is lower than the temperatures of the close ring-shaped conductors 84b, 84c, and 84d placed closer to the heat source. Accordingly, a heat dissipation area for dissipating heat so as to lower the temperature of the ring-shaped conductor 84a serving as the conduction path of principal current to a level equal to or lower than a designed upper limit temperature is smaller than a heat dissipation area for dissipating heat so as to lower the temperatures of the ring-shaped conductors 84b, 84c, and 84d not serving as the conduction path of principal current to a level equal to or lower than the designed upper limit temperature. Therefore, since the contact case 8 can be downsized in the gas-insulated switch 50 according to the fourth embodiment, the inner diameter of the grounded tank 1 necessary for electrical insulation decreases. Thus, the apparatus can be reduced in size.

### Fifth Embodiment.

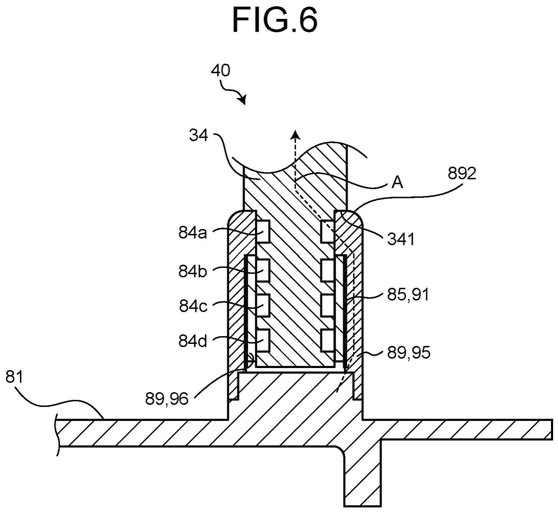

FIG. 6 is an enlarged view of an electrical connector of a gas-insulated switch according to a fifth embodiment. The gas-insulated switch 50 according to the fifth embodiment is the same as the gas-insulated switch 50 according to the first embodiment, except for the electrical connector 40. The electrical connector 40 of the gas-insulated switch 50 according to the fifth embodiment includes: a first cylindrical conductor 95 that is a part of the cylindrical conductor 89; and a second cylindrical conductor 96 that is a part of the cylindrical conductor 89. The second cylindrical conductor 96 has a cylindrical shape, and is narrower and shorter than the first cylindrical conductor 95. The second cylindrical conductor 96 is placed in the first cylindrical conductor 95 in such a way as to be closer to the main body 81. Note that since the switching part 4 (not illustrated in FIG. 6) is disposed closer to the main body 81 than to the cylindrical conductor 89, the second cylindrical conductor 96 is located closer to the switching part 4 in the first cylindrical conductor 95. An inner peripheral surface of the first cylindrical conductor 95 is exposed at a position more distant from the main body 81 than a portion where the second cylindrical conductor 96 is placed. The first cylindrical conductor 95 is in contact with the main body 81, but the second cylindrical conductor 96 is not in contact with the main body 81.

The insulating layer 85 is provided between the first cylindrical conductor 95 and the second cylindrical conductor 96. The insulating layer 85 is the insulating film 91 formed on at least one of a part of the first cylindrical conductor 95 and a part of the second cylindrical conductor 96, the part of the first cylindrical conductor 95 being in contact with the second cylindrical conductor 96, the part of the second cylindrical conductor 96 being in contact with the first cylindrical conductor 95.

Four grooves are formed in a part of the movable-side outer conductor 34, which is a rod-shaped conductor, to be inserted into the first cylindrical conductor 95 and the second cylindrical conductor 96, which are cylindrical conductors. The ring-shaped conductors 84a, 84b, 84c, and 84d are each fitted into corresponding one of the grooves in the movable-side outer conductor 34. Here, a structure in which the grooves in which the ring-shaped conductors 84a, 84b, 84c, and 84d are disposed are provided in the movable-side outer conductor 34 has been taken as an example. Meanwhile, the grooves in which the ring-shaped conductors 84a, 84b, 84c, and 84d are disposed may be provided in the first cylindrical conductor 95 and the second cylindrical conductor 96. Of the four ring-shaped conductors 84a, 84b, 84c, and 84d, the ring-shaped conductor 84a is most distant from the lower end of the movable-side outer conductor 34. The ring-shaped conductor 84a is in contact with the first cylindrical conductor 95. The ring-shaped conductors other than the ring-shaped conductor 84a, that is, the ring-shaped conductors 84b, 84c, and 84d are in contact with the second cylindrical conductor 96.

In the gas-insulated switch 50 according to the fifth embodiment, the insulating layer 85 is provided between the first cylindrical conductor 95 and the second cylindrical conductor 96, and no current flows between the first cylindrical conductor 95 and the second cylindrical conductor 96. Therefore, the conductor rod 14, the contact 33, the main body 81, the first cylindrical conductor 95, and the ring-shaped conductor 84a form the conduction path of principal current flowing between the movable-side contact 5a and the movable-side outer conductor 34. As indicated by arrow A in FIG. 6, principal current flows only through the ring-shaped conductor 84a, and does not flow through the ring-shaped conductor 84b, 84c, or 84d.

In the gas-insulated switch 50 according to the fifth embodiment, the insulating layer 85 is provided between the first cylindrical conductor 95 and the second cylindrical conductor 96, and the ring-shaped conductors 84b, 84c, and 84d placed near the switching part 4 serving as a heat generator form no conduction path, as in the gas-insulated switch 50 according to the first embodiment. Therefore, even if the ring-shaped conductors 84b, 84c, and 84d placed near the switching part 4 serving as a heat generator increase in temperature, the magnitude of principal current flowing through the conduction path is not affected.

In the gas-insulated switch 50 according to the fifth embodiment, the ring-shaped conductor 84a placed at the position most distant from the heat source serves as the conduction path of principal current. Therefore, the temperature of the ring-shaped conductor 84a serving as the conduction path is lower than the temperatures of the ring-shaped conductors 84b, 84c, and 84d placed closer to the heat source. Accordingly, a heat dissipation area for dissipating heat so as to lower the temperature of the ring-shaped conductor 84a serving as the conduction path of principal current to a level equal to or lower than a designed upper limit temperature is smaller than a heat dissipation area for dissipating heat so as to lower the temperatures of the ring-shaped conductors 84b, 84c, and 84d not serving as the conduction path of principal current to a level equal to or lower than the designed upper limit temperature. Therefore, since the contact case 8 can be downsized in the gas-insulated switch 50 according to the fifth embodiment, the inner diameter of the grounded tank 1 necessary for electrical insulation decreases. Thus, the apparatus can be reduced in size.

The configurations set forth in the above embodiments show examples of the subject matter, and it is possible to combine the configurations with another known technique, and is also possible to partially omit or change the configurations without departing from the scope of the present disclosure.

### Reference Signs List

1 grounded tank; 3a, 3b end plate; 3c cap; 4 switching part; 5a movable-side contact; 5b fixed-side contact; 6 shaft; 8 contact case; 10 fixed-side insulating support member; 11 nozzle; 12 insulating rod; 14 conductor rod; 15 fixed-side shield; 16 fixed-side support; 17 movable-side insulating support member; 22 bushing; 32 puffer chamber; 33 contact; 34 movable-side outer conductor; 35 movable-side shield; 36 fixed-side outer conductor; 40 electrical connector; 50 gas-insulated switch; 81 main body; 84a, 84b, 84c, 84d ring-shaped conductor; 85 insulating layer; 87 support portion; 88 rod-shaped conductor; 89 cylindrical conductor; 91, 94 insulating film; 92 insulating thin plate; 95 first cylindrical conductor; 96 second cylindrical conductor; 331 intermediate plate; 341 step; 342, 881 tip; 351, 892 end portion; 891 bottom surface; 893 inner peripheral surface.

## Claims

1. A gas-insulated apparatus comprising:
an airtight container in which insulating gas is enclosed;
a heat generator disposed inside the airtight container and generates heat when principal current flows; and
an electrical connector:
disposed inside the airtight container; and
is a portion of electrical connection between a rod-shaped conductor and a cylindrical conductor, wherein
the rod-shaped conductor:
forms a conduction path of the principal current; and
inserted into the cylindrical conductor to form the conduction path of the principal current, wherein
the electrical connector includes a plurality of ring-shaped conductors placed between the rod-shaped conductor and the cylindrical conductor,
the plurality of ring-shaped conductors include:
at least one first ring-shaped conductors and at least one second ring-shaped conductors, the second ring-shaped conductors being each disposed at a position more distant from the heat generator than the first ring-shaped conductors, and
an insulating layer is provided between each of the first ring-shaped conductors and the cylindrical conductor or between each of the first ring-shaped conductors and the rod-shaped conductor.

2. The gas-insulated apparatus according to claim 1, wherein
the insulating layer is an insulation film formed on at least one of:
a part of the cylindrical conductor being in contact with the first ring-shaped conductors; and
a part of the rod-shaped conductor being in contact with the first ring-shaped conductor.

3. The gas-insulated apparatus according to claim 1, wherein
the insulating layer is an insulating plate disposed between the cylindrical conductor and the rod-shaped conductor.

4. The gas-insulated apparatus according to claim 1, wherein
the insulating layer is an insulation film formed on a part of the first ring-shaped conductor being in contact with the rod-shaped conductor.

5. A gas-insulated apparatus comprising:
an airtight container in which insulating gas is enclosed;
a heat generator disposed inside the airtight container and generates heat when principal current flows; and
an electrical connector:
disposed inside the airtight container; and
is a portion of electrical connection between a rod-shaped conductor and a cylindrical conductor, wherein
the rod-shaped conductor:
forms a conduction path of the principal current; and inserted into the cylindrical conductor to form the conduction path of the principal current, wherein
the electrical connector include:
at least one first ring-shaped conductors and at least one second ring-shaped conductors, the second ring-shaped conductors being each disposed at a position more distant from the heat generator than the first ring-shaped conductors,
the cylindrical conductor includes:
a first cylindrical conductor; and
a second cylindrical conductor having a cylindrical shape, the second cylindrical conductor being narrower and shorter than the first cylindrical conductor, and being placed in the first cylindrical conductor in such a way as to be closer to the heat generator, and
an insulating layer is provided between the first cylindrical conductor and the second cylindrical conductor.

6. The gas-insulated apparatus according to claim 5, wherein
the insulating layer is an insulating film formed on at least one of:
a part of the first cylindrical conductor being in contact with the second cylindrical conductor; and
a part of the second cylindrical conductor being in contact with the first cylindrical conductor.

7. The gas-insulated apparatus according to any one of claims 1 to 6, wherein
a plurality of grooves are formed in a part of the rod-shaped conductor, the part of the rod-shaped conductor being inserted into the cylindrical conductor, and
each of the plurality of ring-shaped conductors is disposed in corresponding one of the plurality of grooves.
